# EUROPEAN PATENT APPLICATION

(11) **EP 3 547 762 A1**
(43) Date of publication of application: **02.10.2019**
(21) Application number: 17889872.2
(22) Date of filing: 05.01.2017
(51) Int. Cl.: H04W 52/02, H04W 76/28, H04W 72/10, H04W 72/12

(54) **DATA TRANSMISSION METHOD AND DEVICE**

(71) Applicant: Guangdong OPPO Mobile Telecommunications Corp., Ltd., Dongguan, Guangdong 523860 (CN)
(72) Inventor: LIU, JianHua, Dongguan Guangdong 523860 (CN); YANG, Ning, Dongguan Guangdong 523860 (CN)
(74) Representative: Manitz Finsterwald Patent- und Rechtsanwaltspartnerschaft mbB
(86) International application number: PCT/CN2017/070319
(87) International publication number: WO 2018/126407

(57) **Abstract**

Embodiments of the present invention disclose a data transmission method and a device. The method includes: receiving, by a terminal, data of a second service of the terminal by using a first resource corresponding to a first service during an on-duration of a first discontinuous reception (DRX) mechanism of the first service; wherein a priority of the second service is greater than a priority of the first service, and a second discontinuous reception (DRX) mechanism of the second service is in a dormant period. In the embodiments of the present invention, data scheduling delay of a high-priority service corresponding to a DRX mechanism which is originally in a dormant period of the terminal is optimized, thereby improving efficiency of data scheduling.

## Description

### Technical Field

The present invention relates to the field of communication technologies, and particularly, relates to a data transmission method and device.

### Background

The 4th Generation (4G) mobile communication network, such as the Long Term Evolution (LTE) network, has now achieved wide coverage. The 4G network is characterized by fast communication speed, wide network spectrum and flexible communication. However, with the emergence of network requirements such as the Internet of Things and the Internet of Vehicles, users increasingly demand the next-generation mobile communication network, that is, the 5th Generation (5G) mobile communication network. For example, a user experience rate of 100 mega bytes per second (mbps) for a continuous wide area coverage, a user experience rate of 1 kilomega bytes per second (gbps) for hot spots, air interface delay within 1 millisecond (ms), end-to-end delay within 100ms, reliability guarantee and so on are required.

In the 4G network, a DRX (Discontinuous Reception) mechanism of a terminal is based on each terminal, but the DRX mechanism of the terminal in the 5G network is based on the service type of the terminal, that is, DRX mechanisms corresponding to different services of the terminal are different. For example, a first service corresponds to a first DRX mechanism, and a second service corresponds to a second DRX mechanism. Correspondingly, the terminal can receive data of the first service during an on-duration of the first DRX mechanism, and can receive data of the second service during an on-duration of the second DRX mechanism. How to optimize delay of data of a service not corresponding to a current DRX mechanism in the scheduling process is a hot issue in the 5G network.

### Summary

Embodiments of the invention provide a data transmission method and device, so as to optimize data scheduling delay of a high-priority service corresponding to a non-current DRX mechanism of a terminal and improve data scheduling efficiency.

In a first aspect, an embodiment of the present invention provides a data transmission method, including: receiving, by a terminal, data of a second service of the terminal by using a first resource corresponding to a first service during an on-duration of a first discontinuous reception (DRX) mechanism of the first service; wherein a priority of the second service is greater than a priority of the first service, and a second discontinuous reception (DRX) mechanism of the second service is in a dormant period.

According to a second aspect, an embodiment of the present invention provides a data transmission method, which includes: when a network side device detects to-be-transmitted data of a second service of a terminal during an on-duration of a first discontinuous reception (DRX) mechanism of a first service of the terminal, and a second discontinuous reception (DRX) mechanism of the second service is in a dormant period, sending, by the network side device, the data of the second service by using a first resource corresponding to the first service; wherein a priority of the second service is higher than a priority of the first service.

According to a third aspect, an embodiment of the present invention provides a data transmission method, which includes: entering, by a terminal, an on-duration in a second DRX mechanism of a second service during an on-duration of a first discontinuous reception (DRX) mechanism of a first service, wherein a priority of the second service is greater than a priority of the first service; and receiving, by the terminal, the data of the second service by using a second resource corresponding to the second service during an on-duration of the first DRX mechanism.

According to a fourth aspect, an embodiment of the present invention provides a data transmission method, which includes: sending, by a network side device, data of a second service by using a second resource corresponding to the second service of a terminal during an on-duration of a first discontinuous reception (DRX) mechanism of a first service of the terminal, wherein a priority of the second service is greater than a priority of the first service.

In a fifth aspect, an embodiment of the present invention provides a terminal. The terminal possesses functions of implementing acts of the terminal designed in the foregoing methods. The functions may be implemented by using hardware, or may be implemented by executing corresponding software through hardware. The hardware or software includes one or more modules corresponding to the foregoing functions.

In a possible design, the terminal includes a processor. The processor is configured to support the terminal to execute a corresponding function in the foregoing methods. Moreover, the terminal may further include a transceiver. The transceiver is used for supporting communication between the terminal and the network side device. Moreover, the terminal may further include a memory. The memory is used for coupling to the processor. The memory stores program instructions and data that are necessary for the terminal.

In a sixth aspect, an embodiment of the present invention provides a network side device. The network side device possesses functions of implementing acts of the network side device designed in the foregoing methods. The functions may be implemented by using hardware, or may be implemented by executing corresponding software through hardware. The hardware or software includes one or more modules corresponding to the foregoing functions.

In a possible design, the network side device includes a processor. The processor is configured to support the network side device to execute a corresponding function in the foregoing methods. Moreover, the network side device may further include a transceiver. The transceiver is used for supporting communication between the terminal and network side device. Moreover, the network side device may further include a memory. The memory is used for coupling to the processor. The memory stores program instructions and data that are necessary for the network side device.

It can be seen that in the embodiments of the first, second and fifth aspects of the present invention, the priority of the second service of the terminal is greater than the priority of the first service. When the network side device detects the to-be-transmitted data of the second service of the terminal during the on-duration of the first discontinuous reception (DRX) mechanism of the first service of the terminal, and the second discontinuous reception (DRX) mechanism of the second service is in the dormant period, the network side device sends the data of the second service by using the first resource corresponding to the first service. Accordingly, the terminal receives the data of the second service by using the first resource corresponding to the first service during the on-duration of the first DRX mechanism of the first service. This can reduce waiting time for the terminal to receive the data of the second service in the on-duration of the second DRX mechanism according to the sequential scheduling strategy. It is beneficial to optimize data scheduling delay of the high-priority service corresponding to the DRX mechanism of the terminal in the dormant period, and improve data scheduling efficiency.

It can be seen that in the embodiments of the third, fourth, and sixth aspects of the present invention, the priority of the second service of the terminal is greater than the priority of the first service. The network side device sends the data of the second service by using the second resource corresponding to the second service of the terminal during an on-duration of the first discontinuous reception (DRX) mechanism of the first service of the terminal. Accordingly, the terminal enters an on-duration in the second DRX mechanism of the second service during the on-duration of the first DRX mechanism of the first service, and receives the data of the second service by using the second resource corresponding to the second service during an on-duration of the first DRX mechanism. It can be seen that the terminal advances the on-duration of the second DRX mechanism of the second service, and the terminal can receive the data of the second service on the second resource corresponding to the second service, thereby reducing waiting time for the terminal to receive the data of the second service. It is beneficial to optimize data scheduling delay of a high-priority service corresponding to the DRX mechanism of the terminal in the dormant period, and improve data scheduling efficiency.

### Brief Description of Drawings

In the following, the accompanying drawings used for describing embodiments or the prior art are briefly illustrated.
FIG. 1A is a schematic diagram of a possible network architecture according to an embodiment of the present invention;
FIG. 1B is a schematic diagram of a DRX mechanism of a terminal based on different services according to an embodiment of the present invention;
FIG. 2A is a schematic diagram of communication in a data transmission method according to an embodiment of the present invention;
FIG. 2B is an exemplary diagram where a terminal receives data of a second service according to an embodiment of the present invention;
FIG. 3A is a schematic diagram of communication in a data transmission method according to an embodiment of the present invention;
FIG. 3B is an exemplary diagram where a terminal receives data of a second service according to an embodiment of the present invention;
FIG. 4A is a schematic structural diagram of a terminal according to an embodiment of the present invention;
FIG. 4B is a schematic structural diagram of a terminal according to an embodiment of the present invention;
FIG. 5A is a schematic structural diagram of a network side device according to an embodiment of the present invention;
FIG. 5B is a schematic structural diagram of another network side device according to an embodiment of the present invention; and
FIG. 6 is a schematic structural diagram of another terminal according to an embodiment of the present invention.

### Detailed Description

Hereinafter, technical solutions in the embodiment of the present invention will be described with reference to the accompanying drawings.

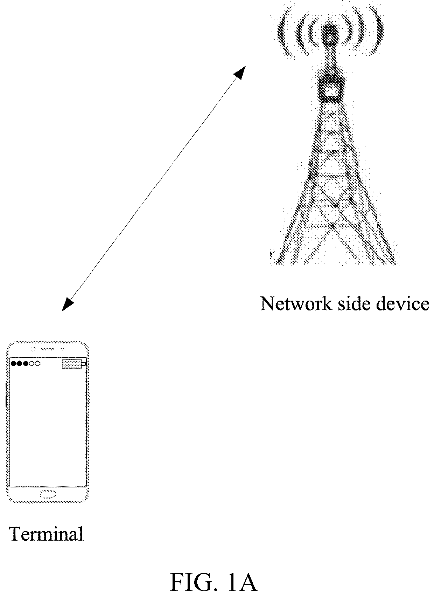

Referring to FIG. 1A, FIG. 1A is a schematic diagram of a possible network architecture according to an embodiment of the present invention. The network architecture includes a network side device and a terminal. When the terminal accesses a mobile communication network provided by the network side device, the terminal and the network side device can be communicatively connected through a wireless link. The network side device may be, for example, a base station in a 5G network. In embodiments of the present, the terms "network" and "system" are often used alternately, but persons skilled in the art may understand the meanings thereof. The terminal related to embodiments of the present invention may include various devices (such as handheld devices, vehicular devices, wearable devices, computing devices) with wireless connection capability, or other processing devices connected to a wireless modem, and various user equipment (UEs), mobile stations (MSs), terminal devices, and the like. For ease of description, the devices mentioned above are all referred to as terminal.

In addition, the discontinuous reception (DRX) mechanism described in the embodiment of the present invention refers to the DRX mechanism (DRX in RRC CONNECTED) in an RRC (Radio Resource Control) connected state.

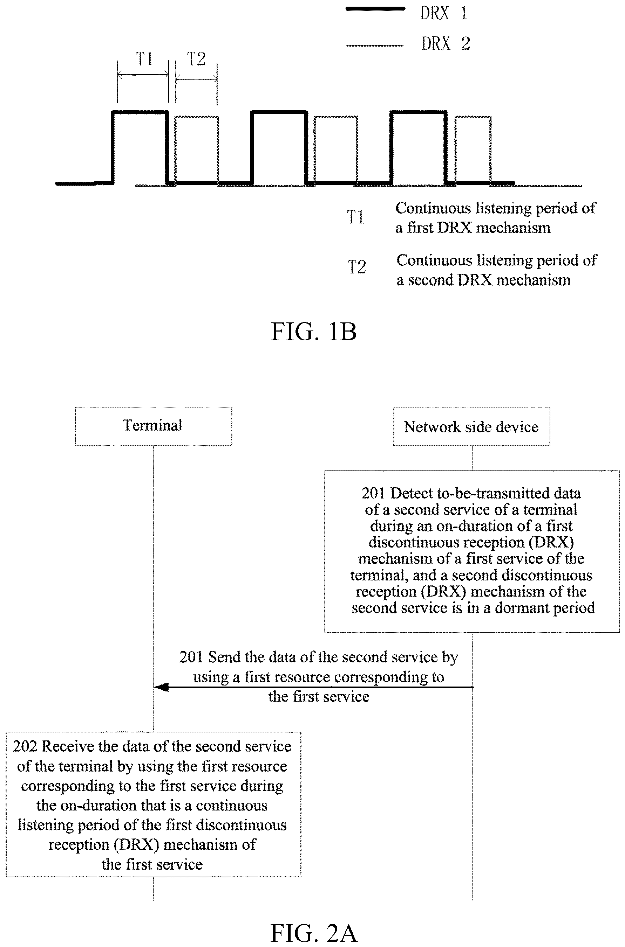

The sequential scheduling process for data of multiple services based on the multi-task DRX mechanism by the terminal in the network architecture as shown in FIG. 1A will be briefly explained in the following as an example. Referring to FIG. 1B, it is assumed that DRX mechanisms of the terminal include a first DRX mechanism and a second DRX mechanism, the first DRX mechanism supports an eMBB (enhanced mobile broadband) service of the terminal, the second DRX mechanism supports a uRLLC (ultra Reliable & Low Latency Communication) service of the terminal, and an on-duration of the first DRX mechanism is different from that of the second DRX mechanism. If the network side device detects data of the uRLLC service of the terminal during the on-duration of the first DRX mechanism, since the terminal can receive data of only the eMBB service during the on-duration of the current first DRX mechanism, the network side device needs to delay sending the the data of the uRLLC service to the terminal till the on-duration of the second DRX mechanism. Accordingly, the terminal can receive the data of the uRLLC service during the on-duration of the second DRX mechanism.

It can be seen from the sequence scheduling process of the data in the above example that the scheduling delay of the data of the service corresponding to the DRX mechanism of the terminal in the dormant period is relatively high, and it is difficult to meet the user requirements of a specific scene, such as the video service of the terminal. Based on this, an embodiment of the present invention provides a data transmission method.

Referring to FIG. 2A, FIG. 2A shows a data transmission method provided by an embodiment of the present invention, which is applied to a mobile communication network including a network side device and a terminal. The network side device is communicatively connected with the terminal. The method is described from multiple perspectives of the network side device and the terminal. The method includes acts 201 to 202, which are specifically as follows.

In act 201, when a network side device detects to-be-transmitted data of a second service of a terminal during an on-duration of a first discontinuous reception (DRX) mechanism of a first service of the terminal, and a second discontinuous reception (DRX) mechanism of the second service is in a dormant period, the network side device sends the data of the second service by using a first resource corresponding to the first service; wherein a priority of the second service is higher than a priority of the first service.

It can be understood that the service division mechanisms for the first service and the second service can be varied, and the embodiment of the present invention is not limited to the only one. For example, the first service and the second service can be divided by frequency domain resources, or the first service and the second service can be divided by baseband processing resources. The first service and the second service may be, for example, an eMBB service, an mMTC (mass Machine-Type Communication), an uRLLC service, or the like supported by 5G standard network. The first service and the second service in this embodiment are not limited to the above-mentioned type of service division.

In the on-duration of the first DRX mechanism, the network side device sends the data of the first service, and the terminal monitors a downlink control channel. The on-duration is generally timed by a continuous monitoring timer which is an On-Duration timer.

In a possible example, the first DRX mechanism refers to a DRX mechanism of the terminal on the first resource corresponding to the first service, the second DRX mechanism refers to a DRX mechanism of the terminal on the second resource corresponding to the second service, and difference between the first resource and the second resource includes difference between a radio frequency (RF) band corresponding to the first service and a radio frequency (RF) band corresponding to the second service, or includes difference between a baseband processing mode corresponding to the first service and a baseband processing mode corresponding to the second service under a same radio frequency resource.

In a possible example, sending, by the network side device, the data of the second service by using the first resource corresponding to the first service includes: sending, by the network side device, a downlink control channel during an on-duration of the first DRX mechanism corresponding to the first service, wherein the downlink control channel is used for scheduling the data of the second service; and sending, by the network side device, the data of the second service by using the first resource corresponding to the first service according to the downlink control channel.

In a possible example, the first resource is a first resource corresponding to the first service, the second resource is a second resource corresponding to the second service, and a numerology, that is, the base parameter set, of the first resource is different from a numerology of the second resource. Sending, by the network side device, the data of the second service by using the first resource corresponding to the first service includes: updating, by the network side device, the numerology of the first resource with the numerology of the second resource; and sending, by the network side device, the data of the second service by using the first resource corresponding to the first service.

In act 202, the terminal receives the data of the second service of the terminal by using the first resource corresponding to the first service during the on-duration of the first discontinuous reception (DRX) mechanism of the first service; wherein the priority of the second service is greater than the priority of the first service, and the second discontinuous reception (DRX) mechanism of the second service is in the dormant period.

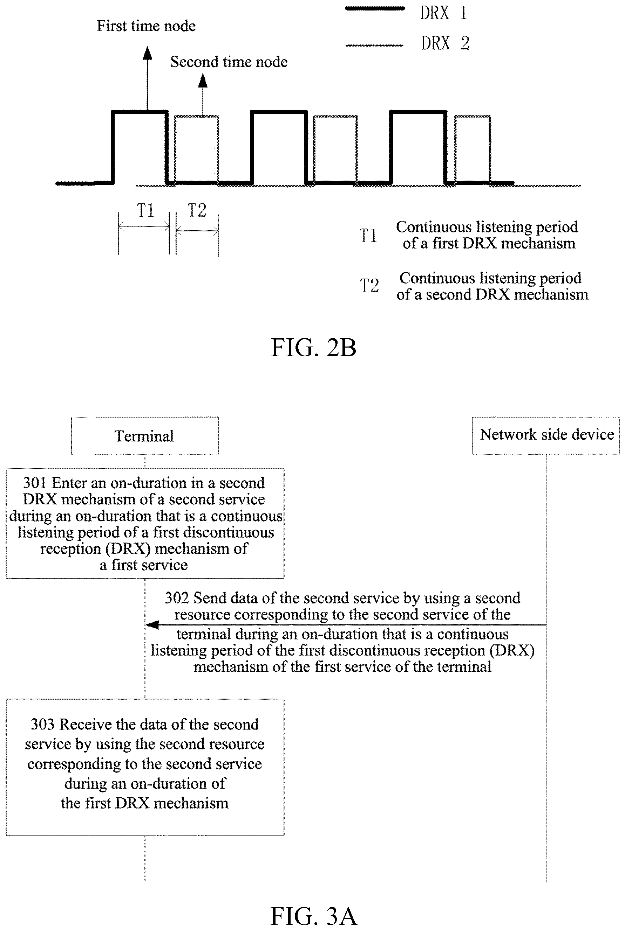

In a specific implementation, as shown in FIG. 2B, it is assumed that the terminal receives the data of the second service of the terminal by using the first resource corresponding to the first service at a first time node during the on-duration of the first discontinuous reception (DRX) mechanism of the first service. While if the terminal receives the data of the second service according to the existing sequential scheduling strategy, the terminal would receive the data of the second service by using the second resource corresponding to the second service at a second time node during the on-duration of the second DRX mechanism. Therefore, the delay for receiving the data of the second service is reduced since the terminal receives the data of the second service at the first time node.

In a possible example, receiving, by the terminal, the data of the second service of the terminal by using the first resource corresponding to the first service includes: receiving, by the terminal, a downlink control channel during an on-duration of the first DRX mechanism corresponding to the first service, wherein the downlink control channel is used for scheduling the data of the second service; and receiving, by the terminal, the data of the second service of the terminal by using the first resource corresponding to the first service according to the downlink control channel.

In a possible example, after receiving, by the terminal, the data of the second service of the terminal by using the first resource corresponding to the first service, the method further includes: entering, by the terminal, an on-duration at a start position of an on-duration of the second DRX mechanism; or entering, by the terminal, a dormant duration at a start position of an on-duration of the second DRX mechanism.

It can be seen that in the embodiment of the present invention, the priority of the second service of the terminal is greater than the priority of the first service. When the network side device detects the to-be-transmitted data of the second service of the terminal during the on-duration of the first discontinuous reception (DRX) mechanism of the first service of the terminal, and the second discontinuous reception (DRX) mechanism of the second service is in the dormant period, the network side device sends the data of the second service by using the first resource corresponding to the first service. Accordingly, the terminal receives the data of the second service by using the first resource corresponding to the first service during the on-duration of the first DRX mechanism of the first service. This can reduce waiting time for the terminal to receive the data of the second service in the on-duration of the second DRX mechanism according to the sequential scheduling strategy. It is beneficial to optimize data scheduling delay of the high-priority service corresponding to the DRX mechanism of the terminal in the dormant period, and improve data scheduling efficiency.

Referring to FIG. 3A, FIG. 3A shows a data transmission method provided by an embodiment of the present invention, which is applied to a mobile communication network including a network side device and a terminal. The network side device is communicatively connected with the terminal. The method is described from multiple perspectives of the network side device and the terminal. The method includes acts 301 to 304, which are specifically as follows.

In act 301, a terminal enters an on-duration in a second DRX mechanism of a second service during an on-duration of a first discontinuous reception (DRX) mechanism of a first service, wherein the priority of the second service is greater than the priority of the first service.

In a possible example, the first DRX mechanism refers to a DRX mechanism of the terminal on the first resource corresponding to the first service, the second DRX mechanism refers to a DRX mechanism of the terminal on the second resource corresponding to the second service, and difference between the first resource and the second resource includes difference between a radio frequency (RF) band corresponding to the first service and a radio frequency (RF) band corresponding to the second service, or includes difference between a baseband processing mode corresponding to the first service and a baseband processing mode corresponding to the second service under a same radio frequency resource.

In a possible example, entering, by the terminal, the on-duration in the second DRX mechanism of the second service includes: receiving, by the terminal, indication information during the on-duration of the first DRX mechanism, wherein the indication information is sent when a network side device detects to-be-transmitted data of the second service of the terminal during the on-duration of the first DRX mechanism and the second DRX mechanism is in a dormant period; and entering, by the terminal, the on-duration in the second DRX mechanism of the second service according to the indication information.

The indication information includes indication information indicating arrival of downlink data of the second service, or indication information indicating the terminal to enter an on-duration in the second DRX mechanism, and the indication information is sent by any one of the following manners: a downlink control channel (such as a Physical Downlink Control Channel, PDCCH), a downlink shared channel (such as a Physical Downlink Shared Channel, PDSCH), and a media access control control element, MAC CE.

In act 302, a network side device sends data of the second service by using a second resource corresponding to the second service of the terminal during an on-duration of the first discontinuous reception (DRX) mechanism of the first service of the terminal, wherein the priority of the second service is greater than the priority of the first service.

In a possible example, the first DRX mechanism refers to a DRX mechanism of the terminal on the first resource corresponding to the first service, the second DRX mechanism refers to a DRX mechanism of the terminal on the second resource corresponding to the second service, and difference between the first resource and the second resource includes difference between a radio frequency (RF) band corresponding to the first service and a radio frequency (RF) band corresponding to the second service, or includes difference between a baseband processing mode corresponding to the first service and a baseband processing mode corresponding to the second service under a same radio frequency resource.

In a possible example, before sending, by the network side device, the data of the second service by using the second resource corresponding to the second service, the method further includes: sending indication information when the network side device detects to-be-transmitted data of the second service during an on-duration of the first DRX mechanism and the second DRX mechanism is in a dormant period; wherein the indication information is used for the terminal to enter an on-duration in the second DRX mechanism.

In a possible example, sending, by the network side device, the data of the second service by using the second resource corresponding to the second service includes: sending, by the network side device, a downlink control channel during an on-duration of the second DRX mechanism corresponding to the second service of the terminal, wherein the downlink control channel is used for scheduling the data of the second service; and sending, by the network side device, the data of the second service by using the second resource corresponding to the second service of the terminal according to the downlink control channel.

In act 303, the terminal receives the data of the second service by using the second resource corresponding to the second service during an on-duration of the first DRX mechanism.

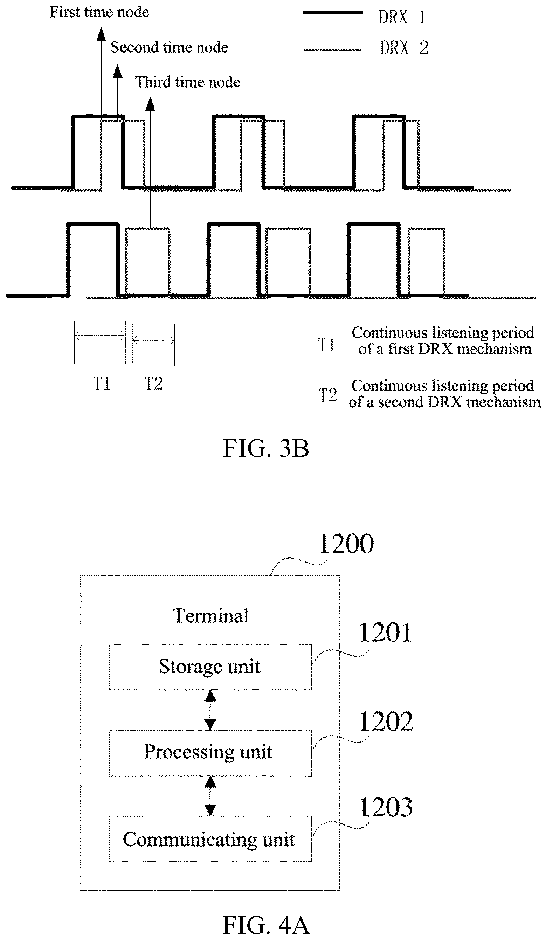

In a specific implementation, as shown in FIG. 3B, it is assumed that: the terminal indicates the second DRX mechanism of the second service to enter an on-duration at a first time node during an on-duration of the first DRX mechanism of the first service, and receives the data of the second service by using the second resource corresponding to the second service at a second time node during an on-duration of the first DRX mechanism (which can also be considered as a second time node during an on-duration of the current second DRX mechanism). While if the terminal receives the data of the second service according to the existing sequential scheduling strategy, the terminal would receive the data of the second service at a third time node during an on-duration of an original second DRX mechanism. Therefore, the delay for receiving the data of the second service is reduced since the terminal receives the data of the second service at the second time node.

In a possible example, receiving, by the terminal, the data of the second service by using the second resource corresponding to the second service during the on-duration of the first DRX mechanism includes: receiving, by the terminal, a downlink control channel during the on-duration of the first DRX mechanism and during the on-duration of the second DRX mechanism corresponding to the second service, wherein the downlink control channel is used for scheduling the data of the second service; and receiving, by the terminal, the data of the second service by using the second resource corresponding to the second service according to the downlink control channel during the on-duration of the first DRX mechanism.

It can be seen that in the embodiment of the present invention, the priority of the second service of the terminal is greater than the priority of the first service. The network side device sends the data of the second service by using the second resource corresponding to the second service of the terminal during an on-duration of the first discontinuous reception (DRX) mechanism of the first service of the terminal. Accordingly, the terminal enters an on-duration in the second DRX mechanism of the second service during the on-duration of the first DRX mechanism of the first service, and receives the data of the second service by using the second resource corresponding to the second service during an on-duration of the first DRX mechanism. It can be seen that the terminal enters in advance the on-duration of the second DRX mechanism of the second service, and the terminal can receive the data of the second service on the second resource corresponding to the second service, thereby reducing waiting time for the terminal to receive the data of the second service. It is beneficial to optimize data scheduling delay of a high-priority service corresponding to the DRX mechanism of the terminal in the dormant period, and improve data scheduling efficiency.

The foregoing describes the solution provided in the embodiment of the present invention mainly from a perspective of interaction between network elements. It can be understood that the terminal and the network side device include corresponding hardware structures and/or software modules for performing the functions, so as to implement the foregoing functions. A person skilled in the art should easily understand that, in combination with units and algorithm acts in examples described with reference to the embodiments disclosed in this document, the present invention may be implemented by hardware or a combination of hardware and computer software. Whether a function is performed by hardware or computer software driving hardware depends on a particular application and a design constraint condition of the technical solution. Skilled in the art may use different methods to realize the described functions for each particular application, but such realization should not be considered to be beyond the scope of the present invention.

Division for functional units can be performed for the terminal and network device in the embodiments of the present invention according to the above method examples. For example, various functional units can be divided according to various functions, or two or more functions can be integrated into one processing unit. The above integrated unit can be implemented in a form of hardware, or can be implemented in a form of software function unit. It should be noted that, the division for the units in embodiments of the present invention is exemplary, and is merely a logical function division. There can be other divisions in an actual realization.

In a case that an integrated unit is used, FIG. 4A illustrates a possible schematic structural diagram of a first core network device related to the above embodiments. A terminal 400 includes a processing unit 402 and a communication unit 403. The processing unit 402 is used for controlling and managing acts of the terminal. For example, the processing unit 402 is used for supporting the terminal to execute act 202 in FIG. 2A, acts 301, 303 in FIG. 3A, and/or other processes for the techniques described in this document. The communication unit 403 is used for supporting communication between the terminal and other devices, such as communication between the terminal and a network side device as illustrated in FIG. 1. The terminal may further include a storage unit 401 used for storing program codes and data of the terminal.

The processing unit 402 may be a processor or a controller such as a Central Processing Unit (CPU), a general purpose processor, a Digital Signal Processor (DSP), an Application-Specific Integrated Circuit (ASIC), a Field Programmable Gate Array (FPGA), or other programmable logic device, transistor logic device, hardware component, or any combination thereof. The processing unit may implement or execute various illustrative logical blocks, modules, and circuits described in connection with the disclosure of the present invention. The processor may also be a combination for implementing computing functions, e.g., a combination including one or more microprocessors, a combination of a DSP and a microprocessor. The communication unit 403 may be a transceiver or a transceiving circuit and so on. The storage unit 401 may be a memory.

The processing unit 402 is used for receiving data of a second service through the communication unit 403 by using a first resource corresponding to a first service during an on-duration of a first discontinuous reception (DRX) mechanism of the first service; wherein a priority of the second service is greater than a priority of the first service.

In a possible example, the first DRX mechanism refers to a DRX mechanism of the terminal on the first resource corresponding to the first service, the second DRX mechanism refers to a DRX mechanism of the terminal on the second resource corresponding to the second service, and difference between the first resource and the second resource includes difference between a radio frequency (RF) band corresponding to the first service and a radio frequency (RF) band corresponding to the second service, or includes difference between a baseband processing mode corresponding to the first service and a baseband processing mode corresponding to the second service under a same radio frequency resource.

In a possible example, the processing unit 402 is specifically used for receiving a downlink control channel during an on-duration of the first DRX mechanism corresponding to the first service, wherein the downlink control channel is used for scheduling the data of the second service, and receiving the data of the second service of the terminal by using the first resource corresponding to the first service according to the downlink control channel.

In a possible example, after receiving the data of the second service of the terminal through the communication unit 403 by using the first resource corresponding to the first service, the processing unit 402 is further used for: entering an on-duration at a start position of an on-duration of the second DRX mechanism; or entering a dormant duration at a start position of an on-duration of the second DRX mechanism.

The processing unit 402 is used for entering an on-duration in a second DRX mechanism of a second service during an on-duration of a first discontinuous reception (DRX) mechanism of a first service, wherein a priority of the second service is greater than a priority of the first service; and receiving the data of the second service through the communication unit 403 by using a second resource corresponding to the second service during an on-duration of the first DRX mechanism.

In a possible example, the first DRX mechanism refers to a DRX mechanism of the terminal on the first resource corresponding to the first service, the second DRX mechanism refers to a DRX mechanism of the terminal on the second resource corresponding to the second service, and difference between the first resource and the second resource includes difference between a radio frequency (RF) band corresponding to the first service and a radio frequency (RF) band corresponding to the second service, or includes difference between a baseband processing mode corresponding to the first service and a baseband processing mode corresponding to the second service under a same radio frequency resource.

In a possible example, the processing unit 402 is specifically used for receiving indication information through the communication unit 403 during the on-duration of the first DRX mechanism, wherein the indication information is sent when a network side device detects to-be-transmitted data of the second service of the terminal during the on-duration of the first DRX mechanism and the second DRX mechanism is in a dormant period; and the processing unit is specifically used for entering the on-duration in the second DRX mechanism of the second service according to the indication information.

In a possible example, the processing unit 402 is specifically used for receiving a downlink control channel through the communication unit 403 during the on-duration of the first DRX mechanism and during the on-duration of the second DRX mechanism corresponding to the second service, wherein the downlink control channel is used for scheduling the data of the second service. The processing unit 402 is specifically used for receiving the data of the second service through the communication unit 403 by using the second resource corresponding to the second service according to the downlink control channel during the on-duration of the first DRX mechanism.

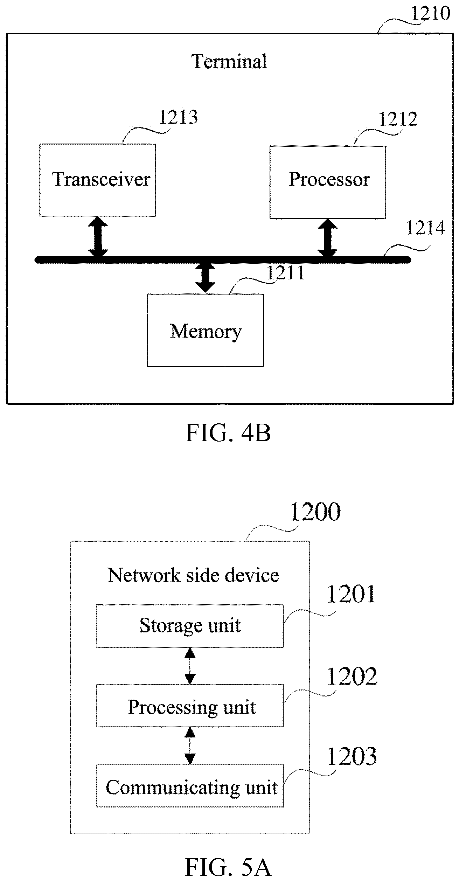

When the processing unit 402 is a processor, the communication unit 403 is a communication interface, and the storage unit 401 is a memory, a terminal related to an embodiment of the present invention may the terminal shown in FIG. 4B.

Referring to FIG. 4B, the terminal 410 includes: a processor 412, a communication interface 413, and a memory 411. Optionally, the terminal 410 may further include a bus 414. The communication interface 413, the processor 412 and the memory 411 are connected to each other via the bus 414. The bus 414 can be a Peripheral Component Interconnect (PCI for short) bus, an Extended Industry Standard Architecture (EISA for short) bus, or the like. The bus 414 may be divided into an address bus, a data bus, a control bus, and the like. For the convenience of representation, the bus in FIG. 4B is represented by using one solid line only, but it does not mean that there is only one bus or one type of bus.

The terminal shown in FIG. 4A or FIG. 4B can also be understood as a device for a terminal, and the embodiment of the present invention is not limited thereto.

In a case that an integrated unit is used, FIG. 5A illustrates a possible schematic structural diagram of a first core network device related to the above embodiments. A network device 500 includes a processing unit 502 and a communication unit 503. The processing unit 502 is used for controlling and managing acts of the network side device. For example, the processing unit 502 is used for supporting the network side device to execute act 201 in FIG. 2A, act 302 in FIG. 3A, and/or other processes for the techniques described in this document. The communication unit 503 is used for supporting communication between the network side device and other devices, such as communication between the terminal and network side device as illustrated in FIG. 1. The network side device may further include a storage unit 501 used for storing program codes and data of the network side device.

The processing unit 502 may be a processor or a controller such as a Central Processing Unit (CPU), a general purpose processor, a Digital Signal Processor (DSP), an Application-Specific Integrated Circuit (ASIC), a Field Programmable Gate Array (FPGA), or other programmable logic device, transistor logic device, hardware component, or any combination thereof. The processing unit may implement or execute various illustrative logical blocks, modules, and circuits described in connection with the disclosure of the present invention. The processor may also be a combination for implementing computing functions, e.g., a combination including one or more microprocessors, a combination of a DSP and a microprocessor. The communication unit 503 may be a transceiver or a transceiving circuit, and so on. The storage unit 501 may be a memory.

The processing unit 502 is used for, when detecting to-be-transmitted data of a second service of a terminal during an on-duration of a first discontinuous reception (DRX) mechanism of a first service of the terminal, and a second discontinuous reception (DRX) mechanism of the second service is in a dormant period, sending the data of the second service through the communication unit 503 by using a first resource corresponding to the first service; wherein a priority of the second service is higher than a priority of the first service.

In a possible example, the first DRX mechanism refers to a DRX mechanism of the terminal on the first resource corresponding to the first service, the second DRX mechanism refers to a DRX mechanism of the terminal on the second resource corresponding to the second service, and difference between the first resource and the second resource includes difference between a radio frequency (RF) band corresponding to the first service and a radio frequency (RF) band corresponding to the second service, or includes difference between a baseband processing mode corresponding to the first service and a baseband processing mode corresponding to the second service under a same radio frequency resource.

In a possible example, the processing unit 502 is specifically used for sending a downlink control channel through the communication unit 503 during an on-duration of the first DRX mechanism corresponding to the first service, wherein the downlink control channel is used for scheduling the data of the second service; and sending the data of the second service through the communication unit 503 by using the first resource corresponding to the first service according to the downlink control channel.

In a possible example, the first resource is a first resource corresponding to the first service, the second resource is a second resource corresponding to the second service, and a numerology (base parameter set) of the first resource is different from a numerology of the second resource. The processing unit 502 is specifically used for: updating the numerology of the first resource to be the numerology of the second resource, and sending the data of the second service through the communication unit 503 by using the first resource corresponding to the first service.

The processing unit 502 is used for sending data of a second service through the communication unit 503 by using a second resource corresponding to the second service of a terminal during an on-duration of a first discontinuous reception (DRX) mechanism of a first service of the terminal, wherein a priority of the second service is greater than a priority of the first service.

In a possible example, the first DRX mechanism refers to a DRX mechanism of the terminal on the first resource corresponding to the first service, the second DRX mechanism refers to a DRX mechanism of the terminal on the second resource corresponding to the second service, and difference between the first resource and the second resource includes difference between a radio frequency (RF) band corresponding to the first service and a radio frequency (RF) band corresponding to the second service, or includes difference between a baseband processing mode corresponding to the first service and a baseband processing mode corresponding to the second service under a same radio frequency resource.

In a possible example, before sending the data of the second service through the communication unit 503 by using the second resource corresponding to the second service 502, the processing unit 502 is further used for sending indication information through the communication unit 503, when detecting to-be-transmitted data of the second service during an on-duration of the first DRX mechanism and the second DRX mechanism is in a dormant period; wherein the indication information is used for the terminal to enter an on-duration in the second DRX mechanism.

In a possible example, the indication information includes indication information indicating arrival of downlink data of the second service, or indication information indicating the terminal to enter an on-duration in the second DRX mechanism, and the indication information is sent by any one of the following manners: a downlink control channel, a downlink shared channel, and a media access control control element.

In a possible example, the processing unit 502 is specifically used for sending a downlink control channel through the communication unit 503 during an on-duration of the second DRX mechanism corresponding to the second service of the terminal, wherein the downlink control channel is used for scheduling the data of the second service; and the processing unit 502 is specifically used for sending the data of the second service through the communication unit 503 by using the second resource corresponding to the second service of the terminal according to the downlink control channel.

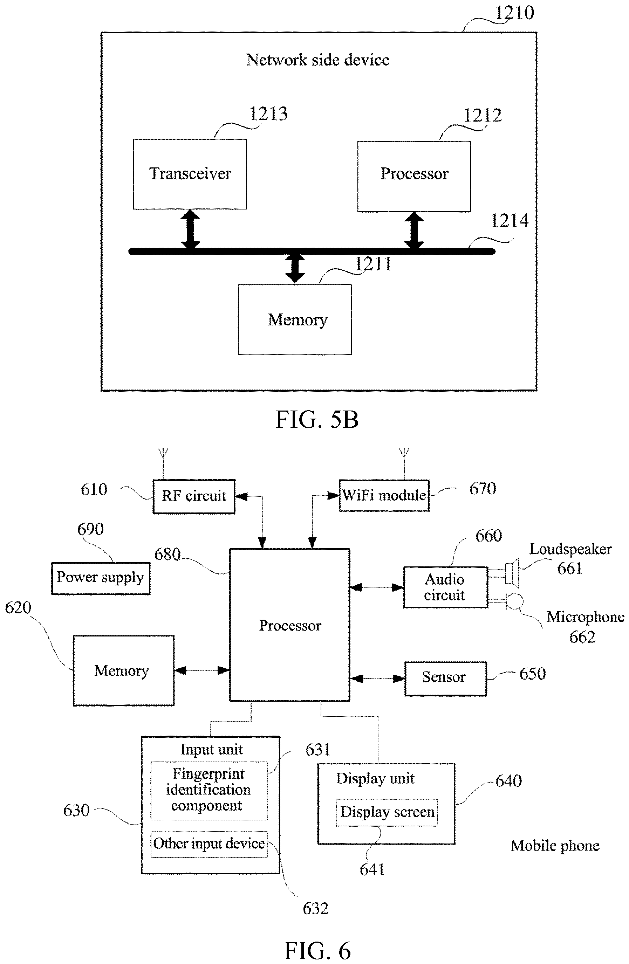

When the processing unit 502 is a processor, the communication unit 503 is a communication interface, and the storage unit 501 is a memory, a network side device related to an embodiment of the present invention may be the network side device shown in FIG. 5B.

Referring to FIG. 5B, the network side device 510 includes: a processor 512, a communication interface 513, and a memory 511. Optionally, the network side device 510 may further include a bus 515. The communication interface 513, the processor 512 and the memory 511 are connected to each other via the bus 515. The bus 515 can be a Peripheral Component Interconnect (PCI for short) bus, an Extended Industry Standard Architecture (EISA for short) bus, or the like. The bus 515 may be divided into an address bus, a data bus, a control bus, and the like. For the convenience of representation, the bus in FIG. 5B is represented by using one solid line only, but it does not mean that there is only one bus or one type of bus.

The network side device shown in FIG. 5A or FIG. 5B can also be understood as an apparatus for a network side device, and the embodiment of the present invention is not limited thereto.

Another terminal is further provided in an embodiment of the present invention. As illustrated in FIG. 6, for ease of illustration, only parts related to embodiments of the present invention are shown, and the specific technical details which are not illustrated may refer to the part of a method according to an embodiment of the present invention. The terminal may be a mobile phone, a tablet computer, a Personal Digital Assistant (PDA), a Point of Sales (POS), a vehicle-mounted computer, or any other terminal device. A mobile phone is taken as an example of the terminal in the following.

FIG. 6 is a block diagram of a partial structure of a mobile phone related to a terminal provided by an embodiment of the present invention. Referring to FIG. 6, the mobile phone includes parts such as a radio frequency (RF) circuit 610, a memory 620, an input unit 630, a display unit 640, a sensor 650, an audio circuit 660, a wireless fidelity (WiFi) module 670, a processor 680, and a power supply 690. A person skilled in the art may understand that the structure of the mobile phone shown in FIG. 6 does not constitute a limitation to the mobile phone, and the mobile phone may include more parts or fewer parts than those shown in the figure, or some parts may be combined, or a different part arrangement may be used.

In the following, each composition part of the mobile phone is specifically described with reference to FIG. 6.

The RF circuit 610 may be used to receive and send information. Generally, the RF circuit 610 includes, but is not limited to, an antenna, at least one amplifier, a transceiver, a coupler, a Low Noise Amplifier (LNA), a duplexer, and the like. In addition, the RF circuit 610 may further communicate with a network and another device via wireless communication. The wireless communication may use any communication standard or protocol, which includes, but is not limited to, a Global System for Mobile Communication (GSM), a General Packet Radio Service (GPRS), Code Division Multiple Access (CDMA), Wideband Code Division Multiple Access (WCDMA), Long Term Evolution (LTE), e-mail, Short Messaging Service (SMS), and the like.

The memory 620 may be used for storing software programs and modules, and the processor 680 runs the software programs and modules stored in the memory 620 to execute various functional applications and data processing of the mobile phone. The memory 620 may mainly include a program storage area and a data storage area, wherein the program storage area may store an operating system, a computer program required for at least one function, and the like. The data storage area may store data or the like created according to the use of the mobile phone. In addition, the memory 620 may include a high speed random access memory, and may also include a non-volatile memory, such as at least one magnetic disk storage device, a flash memory, or other volatile solid-state storage device.

The input unit 630 may be configured to receive input digital or character information, and generate key signal inputs related to user settings and function control of the mobile terminal 600. Specifically, the input unit 630 may include a fingerprint identification component 631 and other input device 632. The fingerprint identification component 631 may collect fingerprint data inputted by the user thereon. Besides the fingerprint identification component 631, the input unit 630 may further include other input device 632. Specifically, the other input devices 632 may include, but is not limited to, one or more of a touch control screen, a physical keyboard, a function key (for example, a volume control key, or a switch key), a track ball, a mouse, a joystick, and so on.

The display unit 640 may be used for displaying information input by the user or information provided for the user, and various menus of the mobile phone. The display unit 640 may include a display screen 641. Optionally, the display screen 641 may be configured by a Liquid Crystal Display (LCD), an Organic Light-Emitting Diode (OLED), or the like. Although the fingerprint identification component 631 and the display screen 641 in FIG. 6 are used as two separate parts to realize the input and input function of the mobile phone, in some embodiments, the fingerprint identification component 631 and the display screen 641 may be integrated to realize the input function and playing function of the mobile phone.

The mobile phone may further include at least one sensor 650, such as an optical sensor, a motion sensor or other sensor. Specifically, the optical sensor may include an ambient light sensor and a proximity sensor, where the ambient light sensor may adjust the luminance of the display screen 641 according to brightness of the ambient light, and the proximity sensor may turn off the display screen 641 and/or backlight when the mobile phone is moved to the ear. As one type of the motion sensor, an acceleration sensor may detect the magnitudes of accelerations in various directions (generally triaxial), may detect the magnitude and direction of the gravity when the sensor is still, may be used in an application for identifying a gesture of a mobile phone (for example, switching between landscape and portrait, related games, and gesture calibration of a magnetometer), and a function related to vibration identification (such as a pedometer and a tap). Other sensors, for example, a gyroscope, a barometer, a hygrometer, a thermometer, and an infrared sensor, which may be configured in the mobile phone are not further described herein.

An audio circuit 660, a loudspeaker 661, and a microphone 662 may provide audio interfaces between the user and the mobile phone. The audio circuit 660 may transmit, to the loudspeaker 661, an electric signal converted from received audio data. The loudspeaker 661 converts the electrical signal into a sound signal for playing. On the other hand, the microphone 662 converts a collected sound signal into an electrical signal. The audio circuit 660 receives the electrical signal and converts the electrical signal into audio data, the audio data are played to the processor 680 for processing. The audio data are sent to another mobile phone through the RF circuit 610, or the audio data are played to the memory 620 for further processing.

WiFi is a short-range wireless transmission technology. The mobile phone may help users to send and receive e-mails, browse web pages and access streaming media and the like through WiFi module 670. The WiFi module 670 provides users with wireless broadband Internet access. Although FIG. 6 shows the WiFi module 670, it may be understood that, the WiFi module 670 is not an essential part of the mobile phone, and can be completely omitted as required without changing the essence of the present invention.

The processor 680 is a control center of the mobile phone, and connects various parts of a whole mobile phone by using various interfaces and circuits. By running or executing software programs and/or modules stored in the memory 620 and invoking data stored in the memory 620, the processor 680 performs various functions of the mobile phone and processes data, thereby performing overall monitoring on the mobile phone. Optionally, the processor 680 may include one or multiple processing units. Preferably, the processor 680 may integrate an application processor and a modulation and demodulation processor, where the application processor mainly processes the operating system, user interface, application program, and so on, and the modulation and demodulation processor mainly processes wireless communication. It may be understood that, the foregoing modem processor may be not integrated into the processor 680.

The mobile phone further includes the power supply 690 (such as a battery) for supplying power to each part. Preferably, the power supply may be logically connected to the processor 680 by using a power management system, thereby implementing functions such as charging, discharging, and power consumption management by using the power management system.

Although not shown in the figure, the mobile phone may further include a camera, a Bluetooth module, and the like, which are not further described herein.

In the foregoing embodiments shown in FIG. 2A and FIG. 3A, the flow at the terminal side in each act of the method can be implemented based on the structure of the mobile phone.

In the foregoing embodiments shown in FIG. 4A and FIG. 4B, the function of each unit can be implemented based on the structure of the mobile phone.

An embodiment of the present invention also provides a computer storage medium, where the computer storage medium is capable of storing a program, which, when being executed, includes all or a part of the steps of any one of the data transmission methods according to the above method embodiments.

The acts of the method or algorithm described in embodiments of the present invention may be implemented in hardware, or implemented in a manner of executing software instructions by a processor. The software instructions may be composed by corresponding software modules. The software modules may be stored in a Random Access Memory (RAM), a flash memory, a Read Only Memory (ROM), an Erasable Programmable Read Only Memory (EPROM), an Electrically Erasable Programmable Read Only Memory (EEPROM), a register, a hard disk, a removable hard disk, a Compact Disc Read-Only Memory (CD-ROM), or a storage medium in any other form well-known in the art. An exemplary storage medium is coupled to the processor such that the processor can read information from a storage medium, and write information to the storage medium. Of course, the storage medium may be a component of the processor. The processor and the storage medium may be located in an ASIC. In addition, the ASIC may be located in a gateway device or a mobility management network element. Of course, the processor and the storage medium may be located as discrete components in a gateway device or a mobility management network element.

Those skilled in the art should realize that, in one or more examples described above, the functions described in embodiments of the present invention may be implemented by using hardware, software, firmware or any combination thereof. When the present invention is implemented by software, the above functions may be stored in a computer readable medium or serve as one or multiple instructions or codes on the computer readable medium for transmission. The computer readable medium includes a computer storage medium and a communication medium, where the communication medium includes any medium for conveniently transmitting computer programs from one place to another place. The storage medium may be any available medium that a general purpose computer or a special purpose computer can access.

The objectives, technical solutions, and benefits of embodiments of the present invention are further described in detail in the foregoing specific embodiments. It should be understood that the foregoing descriptions are merely specific embodiments of the present invention, but are not intended to limit the protection scope of embodiments of the present invention. Any modification, equivalent replacement, or improvement made within the spirit and principle of embodiments of the present invention shall fall within the protection scope of embodiments of the present invention.

## Claims

1. A data transmission method, comprising:
receiving, by a terminal, data of a second service of the terminal by using a first resource corresponding to a first service during an on-duration of a first discontinuous reception (DRX) mechanism of the first service; wherein a priority of the second service is greater than a priority of the first service, and a second discontinuous reception (DRX) mechanism of the second service is in a dormant period.

2. The method of claim 1, wherein the first DRX mechanism refers to a DRX mechanism of the terminal on the first resource corresponding to the first service, the second DRX mechanism refers to a DRX mechanism of the terminal on a second resource corresponding to the second service, and difference between the first resource and the second resource comprises difference between a radio frequency (RF) band corresponding to the first service and a radio frequency (RF) band corresponding to the second service, or comprises difference between a baseband processing mode corresponding to the first service and a baseband processing mode corresponding to the second service under a same radio frequency resource.

3. The method of claim 1 or 2, wherein receiving, by the terminal, the data of the second service of the terminal by using the first resource corresponding to the first service comprises:
receiving, by the terminal, a downlink control channel during the on-duration of the first DRX mechanism corresponding to the first service, wherein the downlink control channel is used for scheduling the data of the second service; and
receiving, by the terminal, the data of the second service of the terminal by using the first resource corresponding to the first service according to the downlink control channel.

4. The method of any one of claims 1-3, wherein after receiving, by the terminal, the data of the second service of the terminal by using the first resource corresponding to the first service, the method further comprises:
entering, by the terminal, an on-duration at a start position of an on-duration of the second DRX mechanism; or
entering, by the terminal, a dormant duration at the start position of the on-duration of the second DRX mechanism.

5. A data transmission method, comprising:
when a network side device detects to-be-transmitted data of a second service of a terminal during an on-duration of a first discontinuous reception (DRX) mechanism of a first service of the terminal, and a second discontinuous reception (DRX) mechanism of the second service is in a dormant period, sending, by the network side device, the data of the second service by using a first resource corresponding to the first service; wherein a priority of the second service is higher than a priority of the first service.

6. The method of claim 5, wherein the first DRX mechanism refers to a DRX mechanism of the terminal on the first resource corresponding to the first service, the second DRX mechanism refers to a DRX mechanism of the terminal on a second resource corresponding to the second service, and difference between the first resource and the second resource comprises difference between a radio frequency (RF) band corresponding to the first service and a radio frequency (RF) band corresponding to the second service, or comprises difference between a baseband processing mode corresponding to the first service and a baseband processing mode corresponding to the second service under a same radio frequency resource.

7. The method of claim 5 or 6, wherein sending, by the network side device, the data of the second service by using the first resource corresponding to the first service comprises:
sending, by the network side device, a downlink control channel during the on-duration of the first DRX mechanism corresponding to the first service, wherein the downlink control channel is used for scheduling the data of the second service; and
sending, by the network side device, the data of the second service by using the first resource corresponding to the first service according to the downlink control channel.

8. The method of any one of claims 5-7, wherein the first resource is a first resource corresponding to the first service, the second resource is a second resource corresponding to the second service, and a numerology of the first resource is different from a numerology of the second resource; wherein sending, by the network side device, the data of the second service by using the first resource corresponding to the first service comprises:
updating, by the network side device, the numerology of the first resource to be the numerology of the second resource;
sending, by the network side device, the data of the second service by using the first resource corresponding to the first service.

9. A data transmission method, comprising:
entering, by a terminal, an on-duration in a second DRX mechanism of a second service during an on-duration of a first discontinuous reception (DRX) mechanism of a first service, wherein a priority of the second service is greater than a priority of the first service; and
receiving, by the terminal, data of the second service by using a second resource corresponding to the second service during the on-duration of the first DRX mechanism.

10. The method of claim 9, wherein the first DRX mechanism refers to a DRX mechanism of the terminal on a first resource corresponding to the first service, the second DRX mechanism refers to a DRX mechanism of the terminal on the second resource corresponding to the second service, and difference between the first resource and the second resource comprises difference between a radio frequency (RF) band corresponding to the first service and a radio frequency (RF) band corresponding to the second service, or comprises difference between a baseband processing mode corresponding to the first service and a baseband processing mode corresponding to the second service under a same radio frequency resource.

11. The method of claim 9 or 10, wherein entering, by the terminal, the on-duration in the second DRX mechanism of the second service comprises:
receiving, by the terminal, indication information during the on-duration of the first DRX mechanism, wherein the indication information is sent by a network side device when the network side device detects to-be-transmitted data of the second service of the terminal during the on-duration of the first DRX mechanism and the second DRX mechanism is in a dormant period; and
entering, by the terminal, the on-duration in the second DRX mechanism of the second service according to the indication information.

12. The method of any one of claims 9-11, wherein receiving, by the terminal, the data of the second service by using the second resource corresponding to the second service during the on-duration of the first DRX mechanism comprises:
receiving, by the terminal, a downlink control channel during the on-duration of the first DRX mechanism and during the on-duration of the second DRX mechanism corresponding to the second service, wherein the downlink control channel is used for scheduling the data of the second service; and
receiving, by the terminal, the data of the second service by using the second resource corresponding to the second service according to the downlink control channel during the on-duration of the first DRX mechanism.

13. A data transmission method, comprising:
sending, by a network side device, data of a second service by using a second resource corresponding to the second service of a terminal during an on-duration of a first discontinuous reception (DRX) mechanism of a first service of the terminal, wherein a priority of the second service is greater than a priority of the first service.

14. The method of claim 13, wherein the first DRX mechanism refers to a DRX mechanism of the terminal on a first resource corresponding to the first service, a second DRX mechanism refers to a DRX mechanism of the terminal on the second resource corresponding to the second service, and difference between the first resource and the second resource comprises difference between a radio frequency (RF) band corresponding to the first service and a radio frequency (RF) band corresponding to the second service, or comprises difference between a baseband processing mode corresponding to the first service and a baseband processing mode corresponding to the second service under a same radio frequency resource.

15. The method of claim 13 or 14, wherein before sending, by the network side device, the data of the second service by using the second resource corresponding to the second service, the method further comprises:
sending, by the network side device, indication information when the network side device detects to-be-transmitted data of the second service during the on-duration of the first DRX mechanism and a second DRX mechanism is in a dormant period; wherein the indication information is used for the terminal to enter an on-duration in the second DRX mechanism.

16. The method of claim 15, wherein the indication information comprises indication information indicating arrival of downlink data of the second service, or indication information indicating the terminal to enter the on-duration in the second DRX mechanism, and the indication information is sent by any one of the following manners: a downlink control channel, a downlink shared channel, and a media access control control element.

17. The method of claims 13-16, wherein sending, by the network side device, the data of the second service by using the second resource corresponding to the second service of the terminal comprises:
sending, by the network side device, a downlink control channel during an on-duration of a second DRX mechanism corresponding to the second service of the terminal, wherein the downlink control channel is used for scheduling the data of the second service; and
sending, by the network side device, the data of the second service by using the second resource corresponding to the second service of the terminal according to the downlink control channel.

18. A terminal, comprising: a processing unit and a communication unit; wherein
the processing unit is used for receiving data of a second service through the communication unit by using a first resource corresponding to a first service during an on-duration of a first discontinuous reception (DRX) mechanism of the first service; wherein a priority of the second service is greater than a priority of the first service.

19. The terminal of claim 18, wherein the first DRX mechanism refers to a DRX mechanism of the terminal on the first resource corresponding to the first service, a second DRX mechanism refers to a DRX mechanism of the terminal on a second resource corresponding to the second service, and difference between the first resource and the second resource comprises difference between a radio frequency (RF) band corresponding to the first service and a radio frequency (RF) band corresponding to the second service, or comprises difference between a baseband processing mode corresponding to the first service and a baseband processing mode corresponding to the second service under a same radio frequency resource.

20. The terminal according to claim 18 or 19, wherein the processing unit is specifically used for: receiving a downlink control channel during the on-duration of the first DRX mechanism corresponding to the first service, wherein the downlink control channel is used for scheduling the data of the second service; and receiving the data of the second service of the terminal by using the first resource corresponding to the first service according to the downlink control channel.

21. The terminal of any one of claims 18-20, wherein the processing unit is further used for: after receiving the data of the second service of the terminal through the communication unit by using the first resource corresponding to the first service, entering an on-duration at a start position of an on-duration of the second DRX mechanism; or entering a dormant duration at the start position of the on-duration of the second DRX mechanism.

22. A network side device, comprising: a processing unit and a communication unit; wherein
the processing unit is used for, when detecting to-be-transmitted data of a second service of a terminal during an on-duration of a first discontinuous reception (DRX) mechanism of a first service of the terminal, and a second discontinuous reception (DRX) mechanism of the second service is in a dormant period, sending the data of the second service through the communication unit by using a first resource corresponding to the first service; wherein a priority of the second service is higher than a priority of the first service.

23. The network side device of claim 22, wherein the first DRX mechanism refers to a DRX mechanism of the terminal on the first resource corresponding to the first service, the second DRX mechanism refers to a DRX mechanism of the terminal on a second resource corresponding to the second service, and difference between the first resource and the second resource comprises difference between a radio frequency (RF) band corresponding to the first service and a radio frequency (RF) band corresponding to the second service, or comprises difference between a baseband processing mode corresponding to the first service and a baseband processing mode corresponding to the second service under a same radio frequency resource.

24. The network side device of claim 22 or 23, wherein the processing unit is specifically used for: sending a downlink control channel through the communication unit during the on-duration of the first DRX mechanism corresponding to the first service, wherein the downlink control channel is used for scheduling the data of the second service; and sending the data of the second service through the communication unit by using the first resource corresponding to the first service according to the downlink control channel.

25. The network side device of any one of claims 22-24, wherein the first resource is a first resource corresponding to the first service, the second resource is a second resource corresponding to the second service, and a numerology of the first resource is different from a numerology of the second resource; wherein the processing unit is specifically used for: updating the numerology of the first resource to be the numerology of the second resource, and sending the data of the second service through the communication unit by using the first resource corresponding to the first service.

26. A terminal, comprising: a processing unit and a communication unit; wherein
the processing unit is used for entering an on-duration in a second DRX mechanism of a second service during an on-duration of a first discontinuous reception (DRX) mechanism of a first service, wherein a priority of the second service is greater than a priority of the first service; and the processing unit is used for receiving data of the second service through the communication unit by using a second resource corresponding to the second service during the on-duration of the first DRX mechanism.

27. The terminal of claim 26, wherein the first DRX mechanism refers to a DRX mechanism of the terminal on a first resource corresponding to the first service, the second DRX mechanism refers to a DRX mechanism of the terminal on the second resource corresponding to the second service, and difference between the first resource and the second resource comprises difference between a radio frequency (RF) band corresponding to the first service and a radio frequency (RF) band corresponding to the second service, or comprises difference between a baseband processing mode corresponding to the first service and a baseband processing mode corresponding to the second service under a same radio frequency resource.

28. The terminal according to claim 26 or 27, wherein the processing unit is specifically used for receiving indication information through the communication unit during the on-duration of the first DRX mechanism, wherein the indication information is sent by a network side device when the network side device detects to-be-transmitted data of the second service of the terminal during the on-duration of the first DRX mechanism and the second DRX mechanism is in a dormant period; and the processing unit is specifically used for entering the on-duration in the second DRX mechanism of the second service according to the indication information.

29. The terminal of any one of claims 26-28, wherein the processing unit is specifically used for receiving a downlink control channel through the communication unit during the on-duration of the first DRX mechanism and during the on-duration of the second DRX mechanism corresponding to the second service, wherein the downlink control channel is used for scheduling the data of the second service; and the processing unit is specifically used for receiving the data of the second service through the communication unit by using the second resource corresponding to the second service according to the downlink control channel during the on-duration of the first DRX mechanism.

30. A network side device, comprising: a processing unit and a communication unit; wherein
the processing unit is used for sending data of a second service through the communication unit by using a second resource corresponding to the second service of a terminal during an on-duration of a first discontinuous reception (DRX) mechanism of a first service of the terminal, wherein a priority of the second service is greater than a priority of the first service.

31. The network side device of claim 30, wherein the first DRX mechanism refers to a DRX mechanism of the terminal on a first resource corresponding to the first service, a second DRX mechanism refers to a DRX mechanism of the terminal on the second resource corresponding to the second service, and difference between the first resource and the second resource comprises difference between a radio frequency (RF) band corresponding to the first service and a radio frequency (RF) band corresponding to the second service, or comprises difference between a baseband processing mode corresponding to the first service and a baseband processing mode corresponding to the second service under a same radio frequency resource.

32. The network side device of claim 30 or 31, wherein the processing unit is further used for: before sending the data of the second service through the communication unit by using the second resource corresponding to the second service, sending indication information through the communication unit when detecting to-be-transmitted data of the second service during the on-duration of the first DRX mechanism, and a second DRX mechanism is in a dormant period; wherein the indication information is used for the terminal to enter an on-duration in the second DRX mechanism.

33. The network side device of claim 32, wherein the indication information comprises indication information indicating arrival of downlink data of the second service, or indication information indicating the terminal to enter the on-duration in the second DRX mechanism, and the indication information is sent by any one of the following manners: a downlink control channel, a downlink shared channel, and a media access control control element.

34. The network side device of claims 30-33, wherein the processing unit is specifically used for sending a downlink control channel through the communication unit during an on-duration of a second DRX mechanism corresponding to the second service of the terminal, wherein the downlink control channel is used for scheduling the data of the second service; and the processing unit is specifically used for sending the data of the second service through the communication unit by using the second resource corresponding to the second service of the terminal according to the downlink control channel.

35. A terminal, comprising: a processor, a memory, and a transceiver, wherein the processor communicates with the memory and the transceiver;
the memory is used for storing program codes and data, and the processor is used for invoking the program codes and data to execute the method of any one of claims 1-4 or 9-12.

36. A network side device comprising: a processor, a memory, and a transceiver, wherein the processor communicates with the memory and the transceiver;
the memory is used for storing program codes and data, and the processor is used for invoking the program codes and data to execute the method of any one of claims 5-8 or 13-17.
